# EUROPEAN PATENT SPECIFICATION

(11) **EP 2 975 772 B1**
(45) Date of publication and mention of the grant of the patent: **07.03.2018**
(21) Application number: 14763605.4
(22) Date of filing: 07.01.2014
(51) Int. Cl.: H04B 1/10, H04B 1/26, H04N 5/50, H04N 5/455, H04N 21/426, H04N 21/438, H04N 5/44

(54) **RECEIVER AND ELECTRONIC APPLIANCE**
EMPFÄNGER UND ELEKTRONISCHE VORRICHTUNG
RÉCEPTEUR, ET APPAREIL ÉLECTRONIQUE

(30) Priority: 15.03.2013 JP 2013053128
(43) Date of publication of application: 20.01.2016
(73) Proprietor: Sony Corporation, Tokyo 108-0075 (JP)
(72) Inventor: SHIMIZU, Hiroyuki, Tokyo 108-0075 (JP); NAKAJIMA, Tomonori, Tokyo 108-0075 (JP)
(74) Representative: Müller Hoffmann & Partner
(86) International application number: PCT/JP2014/000014
(87) International publication number: WO 2014/141573

(56) References cited:
- EP-A2- 2 104 237
- JP-A- H02 309 712
- JP-A- H03 263 911
- JP-A- 2009 225 388
- JP-A- 2010 109 850
- US-A1- 2009 195 693
- Dian Huang ET AL: "A Fast-Locked All-Digital Phase-Locked Loop for Dynamic Frequency Scaling", , 30 April 2012 (2012-04-30), XP055295728, Retrieved from the Internet: URL:https://people.eecs.berkeley.edu/~ying qiao/EE241/PLL_final_report.pdf [retrieved on 2016-08-16]

## Description

### Technical Field

The present disclosure relates to a receiving device that receives a transmission signal such as a television broadcast signal, and an electronic apparatus that includes the receiving device.

### Background Art

Recently, as a television receiver or a video recording device having a receiving circuit that receives a television broadcast, one that includes a plurality of receiving circuits has been developed. For example, a television receiver that includes a plurality of receiving circuits can simultaneously display received images of a plurality of channels on a display screen. In addition, a video recording device that includes a plurality of receiving circuits can simultaneously record the broadcast signals of a plurality of channels.

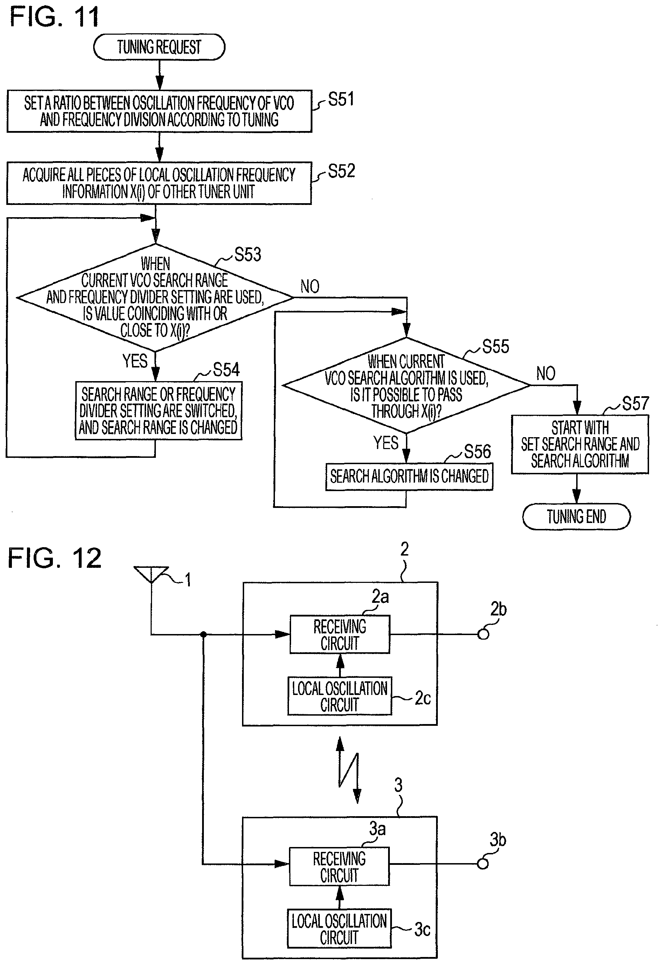

Fig. 12 is a diagram illustrating an example of a device that includes a plurality of receiving circuits of the related art.

A signal received by an antenna 1 is supplied to a first tuner unit 2 and a second tuner unit 3. The first and second tuner units 2 and 3 separately include receiving circuits 2a and 3a, respectively, and each of the receiving circuits 2a and 3a receives a broadcast signal of a specific channel (frequency). For example, the channel which is received by each of the receiving circuits 2a and 3a is determined by an instruction of a control unit (not illustrated) in the device.

Each of the receiving circuits 2a and 3a obtains a base band signal or an intermediate frequency signal which is generated by converting the broadcast signal. In order to obtain the base band signal or the intermediate frequency signal, frequency signals (local oscillation frequency signals) for mixing with the received signals by mixers (not illustrated) in the receiving circuits 2a and 3a are required. The local oscillation frequency signals which are mixed with the received signals by the mixers are obtained from local oscillation circuits 2c and 3c included in each of the tuner units 2 and 3.

Then, each of the receiving circuits 2a and 3a performs demodulation processing of the base band signal or the intermediate frequency signal. Video signals and sound signals which are obtained from the demodulation processing are obtained at output terminals 2b and 3b of the receiving circuits 2a and 3a.

In PTL 1, in a system which includes a plurality of receiving circuits, a technology which prevents an interfering wave from being generated by stopping an operation of a receiving circuit which is not used is described.

JP H03 263911 A is concerned with eliminating interference from a channel selection device on one side to the channel selection device on the other side by skipping a search operation when the frequency of the local oscillator of the channel selection device is within the reception frequency range of the channel selection device on the other side operating a reception operation. To this end, it is disclosed that a controller updates a reception frequency fSR to search another station by a second channel selection device by increasing the frequency fSR by one channel gap Δf of broadcast unless the coincidence decision operation of a program content is performed. Then, a local oscillation frequency fSL when the reception frequency of the second channel selection device is set at fSR is calculated, and the reception frequency of the second channel selection device is set at fSR when the local oscillation frequency fSl comes off a range of fRR + or -(fIBW/2). By performing such processing, the local oscillation frequency of the second channel selection device according to the search operation of another station coincides with the reception frequency by the first channel selection device, and disturbance of the reception operation due to the above coincidence can be eliminated.

In "A Fast-Locked All-Digital Phase-Locked Loop for Dynamic Frequency Scaling" by Huang and Qiao (https://people.eecs.berkeley.edu/∼yingqiao/EE241/PLL final re port.pdf) describes All-Digital Phase-Locked Loop for digital system clock generation and presents a successive-approximation frequency search algorithm to center the starting frequency of digitally controlled oscillator on the target frequency while aligning the phase of the output clock to that of the reference clock.

EP2104237 discloses a receiving device with a plurality of tuners. A method for reducing interference between the plurality of tuners is disclosed.

### Citation List

### Patent Literature

PTL 1: Japanese Unexamined Patent Application Publication No. 2009-188515

### Summary of Invention

### Technical Problem

However, in a case where there are a plurality of tuner units 2 and 3 as illustrated in Fig. 12, there is a possibility that a local oscillation frequency signal which is used for reception by one of the tuner units 2 and 3 may interfere with reception by the other tuner units 2 and 3.

Particularly, an electronic apparatus which includes the tuner unit has been miniaturized in recent years, and in addition, the tuner units 2 and 3 have been miniaturized as integrated circuits. Therefore, in the electronic apparatus, as illustrated in Fig. 12, the plurality of tuner units 2 and 3 are mainly arranged physically and significantly close to each other, and there is a great concern that unnecessary radiation from the tuner units close to each other may degrade reception performance.

An object of the present disclosure is to provide a receiving device and an electronic apparatus which can prevent an interfering wave from being generated in each receiving circuit, in a case where there are a plurality of receiving circuits.

### Solution to Problem

The above object is solved by the subject-matter of the claims.

A receiving device according to the present disclosure includes a plurality of receiving circuits, a plurality of local oscillation circuits that supply local oscillation frequency signals to each of the plurality of receiving circuits, and a control unit that controls each receiving circuit and each local oscillation circuit.

The control unit provides a plurality of search algorithms for searching for a reception frequency in each of the receiving circuits, and selects a search algorithm at the time of searching for the reception frequency of each receiving circuit according to a frequency which is handled by other receiving circuit or other local oscillation circuit.

An electronic apparatus according to the present disclosure includes a plurality of receiving circuits, a plurality of local oscillation circuits that supply local oscillation signals to each of the plurality of receiving circuits, a control unit that controls each receiving circuit and each local oscillation circuit, and a processing unit for received signals.

The control unit provides a plurality of search algorithms for searching for a reception frequency in each of the receiving circuits, and selects a search algorithm at the time of searching for the reception frequency of each receiving circuit according to a frequency which is handled by other receiving circuit or other local oscillation circuit.

According to the present disclosure, when the local oscillation circuit generates the local oscillation signal and the receiving circuit performs the reception processing using the local oscillation signal, the search algorithm which performs searching for the receiving signal can select an appropriate signal which does not interfere with other receiving circuit.

### Advantageous Effects of Invention

According to the present disclosure, appropriate signals which do not interfere with each other can be selected, and thereby each of a plurality of receiving circuits can receive a signal satisfactorily.

### Brief Description of Drawings

[Fig. 1] Fig. 1 is a block diagram illustrating a configuration example according to an embodiment of the present disclosure.
[Fig. 2] Fig. 2 is a block diagram illustrating an example of a receiving circuit according to an embodiment of the present disclosure.
[Fig. 3] Fig. 3 is a flowchart illustrating an example of a search algorithm 1 according to an embodiment of the present disclosure.
[Fig. 4] Fig. 4 is a characteristic diagram illustrating a processing example of the search algorithm 1 according to an embodiment of the present disclosure.
[Fig. 5] Fig. 5 is a flowchart illustrating an example of a search algorithm 2 according to an example of the present disclosure.
[Fig. 6] Fig. 6 is a characteristic diagram illustrating a processing example of the search algorithm 2 according to an embodiment of the present disclosure.
[Fig. 7] Fig. 7 is a flowchart illustrating an example of a search algorithm 3 according to an example of the present disclosure.
[Fig. 8] Fig. 8 is a characteristic diagram illustrating a processing example of the search algorithm 3 according to an embodiment of the present disclosure.
[Fig. 9] Fig. 9 is a flowchart illustrating an example of a search algorithm 4 according to an example of the present disclosure.
[Fig. 10] Fig. 10 is a characteristic diagram illustrating a processing example of the search algorithm 4 according to an embodiment of the present disclosure.
[Fig. 11] Fig. 11 is a flowchart illustrating a selection example of a search algorithm according to an example of the present disclosure.
[Fig. 12] Fig. 12 is a circuit diagram illustrating an example of a receiving device of the related art.

### Description of Embodiments

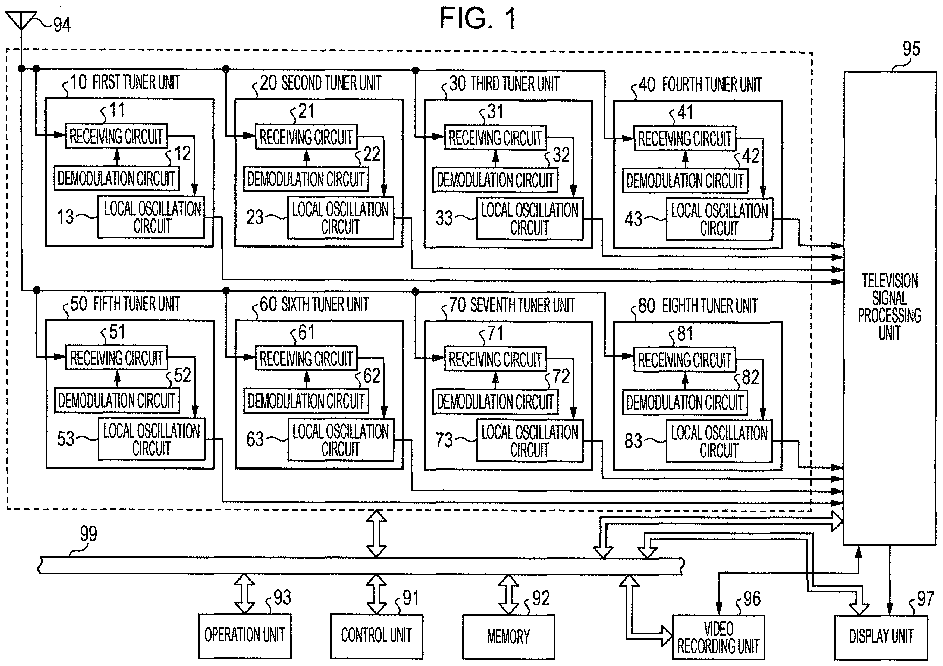

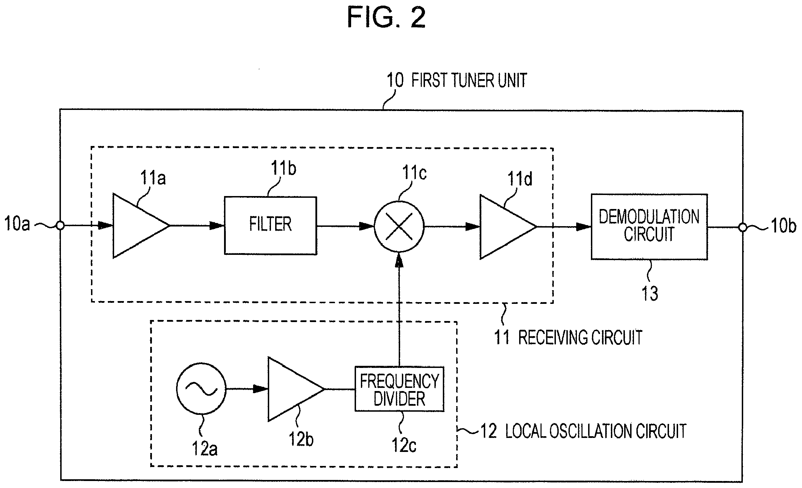

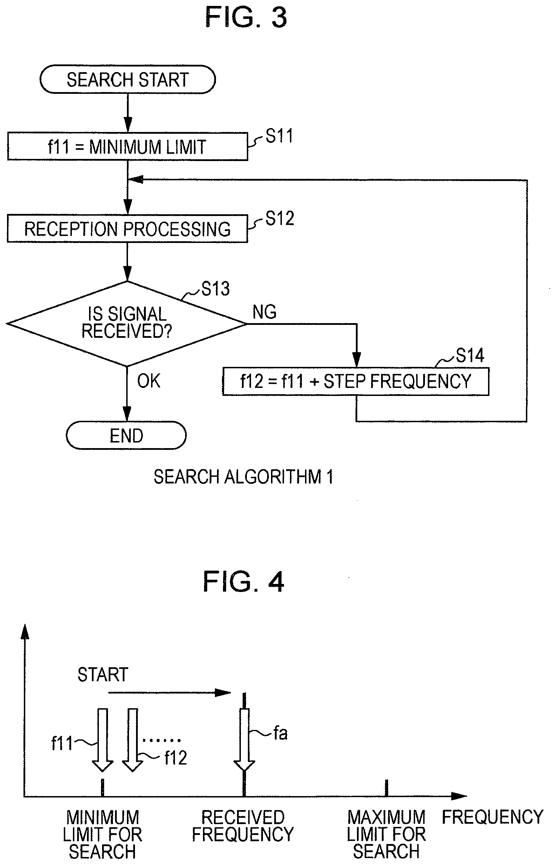

Examples of a receiving device and an electronic apparatus according to an embodiment of the present disclosure will be described in the following sequence, with reference to the drawings.
1. Configuration Example of Receiving Device (Fig. 1 and Fig. 2)
2. Example of Each Search Algorithm (Fig. 3 to Fig. 10)
3. Selection Processing Example of Search Algorithm (Fig. 11)
4. Modification Examples

### 1. Configuration Example of Receiving Device

Fig. 1 is a diagram illustrating a configuration example of a receiving device according to an embodiment of the present disclosure.

The receiving device of the present disclosure is a device which receives a television broadcast signal, and includes a plurality (eight pieces in this example) of tuner units 10, 20, 30, 40, 50, 60, 70, and 80. A signal that an antenna 94 receives is supplied to the tuner units 10 to 80.

The tuner units 10 to 80 separately include receiving circuits 11, 21, 31, 41, 51, 61, 71, and 81, respectively, and each of the receiving circuits 11 to 81 receives a transmission signal (broadcast signal) of a specific channel (frequency). The frequencies that each of the receiving circuits 11 to 81 receives are set by local oscillation signals which are supplied from local oscillation circuits 12, 22, 32, 42, 52, 62, 72, and 82 which are included in the tuner units 10 to 80, respectively. The frequencies that each of the receiving circuits 11 to 81 receives are determined by an instruction of a control unit 91. A generated state of the local oscillation signal in each of the local oscillation circuits 12 to 82 is also determined by the instruction of the control unit 91. The control unit 91 can communicate with the tuner units 10 to 80 via a bus line 99.

For example, when receiving a tuning instruction of the specific channel from an operation unit 93, the control unit 91 instructs the receiving of a corresponding channel to one specific tuner unit (for example, a first tuner unit 10) of the tuner units 10 to 80. At this time, the control unit 91 searches for a frequency which is transferred by a received channel, using one search algorithm selected from a plurality of search algorithms stored in a memory 92. In addition, the plurality of search algorithms will be described in detail later.

Each of the receiving circuits 11 to 81 acquires a base band signal or an intermediate frequency signal which is obtained by converting the frequency of the broadcast signal, through reception processing. Then, demodulation circuits 13, 23, 33, 43, 53, 63, 73, and 83 which are connected to the receiving circuits 11 to 81, respectively, perform demodulation processing of the base band signals or the intermediate frequency signals. Video signals and sound signals which are obtained from the demodulation processing of the demodulation circuits 13 to 83 are supplied to a television signal processing unit 95 from each of the tuner units 10 to 80.

The video signal or the sound signal which is processed in a television signal processing unit 95 is supplied to a video recording unit 96 to be recorded therein. In addition, the video signal which is processed in the television signal processing unit 95 is supplied to a display unit 97 to be displayed thereon. For example, in a case where the video recording unit 96 simultaneously records eight channels different from each other, each of the eight tuner units 10 to 80 performs a receiving operation of the instructed channel according to the instruction of the control unit 91. According to the number of channels which are simultaneously received, the control unit 91 stops the receiving operation of a tuner unit (any one of the tuner units 10 to 80) which is not required to perform the receiving operation.

The eight tuner units 10 to 80 are separately made into an integrated circuit respectively. Alternatively, the eight tuner units 10 to 80 may be made into one integrated circuit. In an example of the present embodiment, frequency bands that the eight tuner units 10 to 80 receive are all the same.

In addition, in the example of Fig. 1, each of the tuner units 10 to 80 performs the demodulation processing of the received signal, but each of the tuner units 10 to 80 may have a configuration of not performing the demodulation processing. That is, each of the tuner units 10 to 80 outputs the base band signal or the intermediate frequency signal, and a processing unit which is connected to a subsequent stage of the tuner units 10 to 80 may perform the demodulation processing.

Fig. 2 is a diagram illustrating an example of a configuration of the first tuner unit 10. A second tuner unit 20 to an eighth tuner unit 80 are also configured in the same manner as the first tuner unit 10.

The receiving circuit 11 includes an amplification circuit 11a that amplifies a high frequency signal which is a transmission signal obtained at an input terminal 10a, a filter 11b that performs a band limitation of the high frequency signal which is amplified by the amplification circuit 11a, and a mixer 11c to which an output of the filter 11b is supplied. The mixer 11c mixes the high frequency signal that is supplied from the filter 11b with the local oscillation signal that is supplied from the local oscillation circuit 12, and converts the mixed signal into the base band signal or the intermediate frequency signal. The base band signal or the intermediate frequency signal which is converted by the mixer 11c is supplied to the demodulation circuit 13 via an amplification circuit 11d.

The local oscillation circuit 12 includes a voltage controlled oscillator 12a, an amplification circuit 12b that amplifies an oscillation signal which is output from the voltage controlled oscillator 12a, and a frequency divider 12c that divides the frequency of the oscillation signal which is output from the amplification circuit 12b. A frequency division ratio of a frequency of the oscillation signal output from the voltage controlled oscillator 12a and a frequency divided by the frequency divider 12c is set according to the control of the control unit 91 (Fig. 1). In addition, the voltage controlled oscillator 12a or the frequency divider 12c is a portion of a circuit that configures a phase locked loop (PLL), and performs a feedback control for stabilizing an oscillation frequency. In addition, a configuration of the PLL is known, and thus the configuration of the PLL is omitted in Fig. 2.

The demodulation circuit 13 performs the demodulation processing of the base band signal or the intermediate frequency signal which is supplied. The video signal or the sound signal that the demodulation circuit 13 demodulates is supplied to a processing unit (television signal processing unit 95 of Fig. 1) of a subsequent stage from an output terminal 10b. As described above, the configuration in which the first tuner unit 10 includes the demodulation circuit 13 is an example, and a configuration in which a tuner unit does not include a demodulation circuit may be made.

### 2. Example of Each Search Algorithm

Next, an example of a search algorithm which searches for a transmission frequency of the received channel, when the control unit 91 controls a receiving operation of each of the tuner units 10 to 80, will be described with reference to Figs. 3 to 10. The receiving device of the present disclosure provides three search algorithms of search algorithm 1 to search algorithm 3. A program which executes the three search algorithms is stored in, for example, the memory 92. Then, when the control unit 91 controls the receiving operation of each of the tuner units 10 to 80, an appropriate one of the three search algorithms is selected. Processing in which the control unit 91 selects the search algorithm will be described later. In addition, in the following description of the search algorithms, it is assumed that the first tuner unit 10 performs the receiving operation.

### Search Algorithm 1

Fig. 3 is a flowchart illustrating the search algorithm 1. Fig. 4 is a diagram illustrating an example of change of the reception frequency at the time of executing the search algorithm 1.

The search algorithm 1 performs a linear search from a minimum limit of a search range. That is, as illustrated in Fig. 3, when the search algorithm 1 is executed, the control unit 91 first determines the search range at the time of searching for the transmission frequency of a target channel, and sets a minimum limit frequency f11 of the search range as a frequency fx at which searching initially starts (step S11). Then, the control unit 91 sets the reception frequency in the tuner unit 10 in such a manner that the minimum limit frequency f11 is received (step S12). At this time, the control unit 91 sends an instruction to the local oscillation circuit 12, in such a manner that the local oscillation signal which is generated by the local oscillation circuit 12 becomes a frequency corresponding to the minimum limit frequency f11.

Then, the control unit 91 determines whether or not the broadcast signal of the target channel is received in the reception processing (step S13). In this determination, in a case where it is determined that the broadcast signal of the target channel is received, a receiving operation at the frequency is continued, and the search processing stops.

In the determination of step S13, in a case where it is determined that the broadcast signal of the target channel is not received, the control unit 91 shifts the frequency fx at which the tuner unit 10 searches to a frequency f12 higher than the current search frequency f11 by one step (step S14). Then, the control unit 91 sets the reception frequency in the tuner unit 10 in such a manner that the search frequency f12 is received (step S12).

Hereinafter, until the broadcast signal of the target channel is received by the tuner unit 10, the control unit 91 repeatedly executes the processing of steps S12, S13, and S14. In addition, step S14 of Fig. 3 shows that the search frequency changes from the frequency f11 to frequency f12, but each time the processing is repeated in step S14, the frequency which is set changes up by one step through the frequencies f12, f13, ....

Fig. 4 is an example of change of the reception frequency in the tuner unit 10, when the control unit 91 executes the search algorithm 1. As illustrated in Fig. 4, the reception frequency of the tuner unit 10 initially becomes the minimum limit frequency f11 of the search range, and after that, becomes the frequency f12 higher than that by one step, and thereafter, gradually increases with the same frequency interval. Then, when the broadcast signal of the target channel is received by the tuner unit 10 at a reception frequency fa, the control unit 91 fixes the reception frequency of the tuner unit 10 to the frequency fa, and ends the search processing.

### Search Algorithm 2

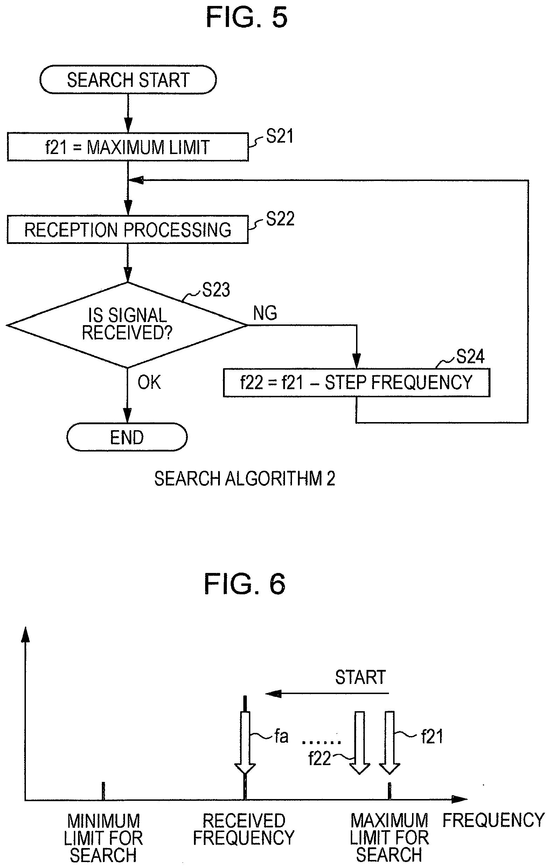

Fig. 5 is a flowchart illustrating the search algorithm 2. Fig. 6 is a diagram illustrating an example of change of the reception frequency at the time of executing the search algorithm 2.

The search algorithm 2 performs a linear search from a maximum limit of a search range. That is, as illustrated in Fig. 5, when the search algorithm 2 is executed, the control unit 91 first determines the search range at the time of searching for the transmission frequency of a target channel, and sets a maximum limit frequency f21 of the search range as a frequency fx at which searching initially starts (step S21). Then, the control unit 91 sets the reception frequency in the tuner unit 10 in such a manner that the maximum limit frequency f21 is received (step S22). At this time, the control unit 91 sends an instruction to the local oscillation circuit 12, in such a manner that the local oscillation signal which is generated by the local oscillation circuit 12 becomes a frequency corresponding to the maximum limit frequency f21.

Then, the control unit 91 determines whether or not the broadcast signal of the target channel is received in the reception processing (step S23). In this determination, in a case where it is determined that the broadcast signal of the target channel is received, a receiving operation at the frequency is continued, and the search processing stops.

In the determination of step S23, in a case where it is determined that the broadcast signal of the target channel is not received, the control unit 91 shifts the frequency fx at which the tuner unit 10 searches to a frequency f22 lower than the current search frequency f21 by one step (step S24). Then, the control unit 91 sets the reception frequency in the tuner unit 10, in such a manner that the search frequency f22 is received (step S22).

Hereinafter, until the broadcast signal of the target channel is received by the tuner unit 10, the control unit 91 repeatedly executes the processing of steps S22, S23, and S24. In addition, step S24 of Fig. 5 shows that the search frequency changes from the frequency f21 to frequency f22, but each time the processing is repeated in step S24, the frequency which is set changes down by one step through the frequencies f22, f23, ....

Fig. 6 is an example of change of the reception frequency in the tuner unit 10, when the control unit 91 executes the search algorithm 2. As illustrated in Fig. 6, the reception frequency of the tuner unit 10 initially becomes the maximum limit frequency f21 of the search range, and after that, becomes the frequency f22 lower than that by one step, and thereafter, gradually decreases with the same frequency interval. Then, when the broadcast signal of the target channel is received by the tuner unit 10 at a reception frequency fa, the control unit 91 fixes the reception frequency of the tuner unit 10 to the frequency fa, and ends the search processing.

### Search Algorithm 3

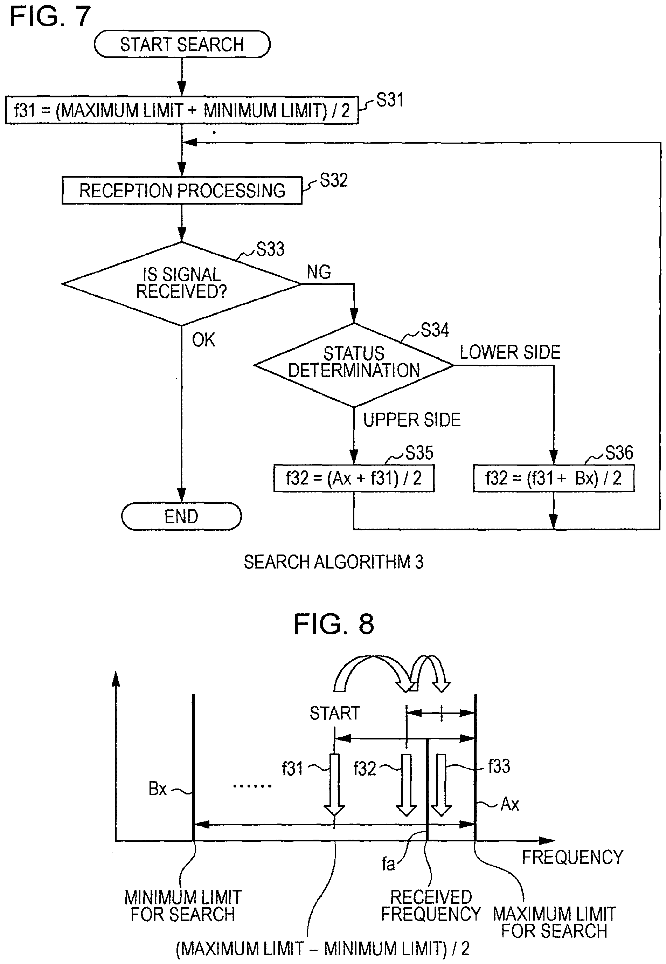

Fig. 7 is a flowchart illustrating the search algorithm 3. Fig. 8 is a diagram illustrating an example of change of the reception frequency at the time of executing the search algorithm 2.

The search algorithm 3 performs a binary search from approximately a middle of a search range. That is, as illustrated in Fig. 7, when the search algorithm 3 is executed, the control unit 91 first determines the search range at the time of searching for the transmission frequency of a target channel. Then, a middle frequency f31 between a maximum limit frequency and a minimum limit frequency of the search range is set as a frequency fx at which searching initially starts (step S31). The middle frequency f31 of the search range is calculated by (maximum limit frequency Ax + minimum limit frequency Bx)÷2.

Then, the control unit 91 sets the reception frequency in the tuner unit 10, in such a manner that the maximum limit frequency f31 is received (step S32). At this time, the control unit 91 sends an instruction to the local oscillation circuit 12, in such a manner that the local oscillation signal which is generated by the local oscillation circuit 12 becomes a frequency corresponding to the maximum limit frequency f31.

Then, the control unit 91 determines whether or not the broadcast signal of the target channel is received in the reception processing (step S33). In this determination, in a case where it is determined that the broadcast signal of the target channel is received, a receiving operation at the frequency is continued, and the search processing stops.

In the determination of step S33, in a case where it is determined that the broadcast signal of the target channel is not received, the control unit 91 determines whether there is a high possibility in that the frequency fa to be searched for is on an upper side or a lower side with respect to the current search frequency f31 (step S34). In this determination, when it is determined that the frequency is on the upper side, the control unit 91 sets the next search frequency f32 to be a middle value between the current search frequency f31 and the maximum limit frequency Ax (step S35). The search frequency f32 at this time is calculated by (maximum limit frequency Ax + search frequency f31)÷2.

In addition, in the determination of step S34, when it is determined that the frequency is on the lower side, the control unit 91 sets the next search frequency f32 to be a middle value between the current search frequency f31 and the minimum limit frequency Bx (step S36). The search frequency f32 at this time is calculated by (search frequency f31 + minimum limit frequency Bx)÷2.

Then, the processing returns to step S32, and the control unit 91 sets the reception frequency in the tuner unit 10, in such a manner that the reception frequency f32 which is set in step S35 or S36 is received.

Hereinafter, until the broadcast signal of the target channel is received by the tuner unit 10, the control unit 91 repeatedly executes the processing of steps S32 to S36, and performs control so as to gradually approach a target reception frequency. In addition, steps S35 and S36 of Fig. 7 show that the search frequency changes from the frequency f31 to frequency f32, but each time the processing is repeated in steps S35 and S36, the frequency which is set changes so as to sequentially approach the target frequency through the frequencies f32, f33, ....

Fig. 8 is an example of change of the reception frequency in the tuner unit 10, when the control unit 91 executes the search algorithm 3. The example of Fig. 8 is an example in which the search frequency fa is determined to be on the upper side with respect to the middle value in step S34, after the reception frequency of the tuner unit 10 initially becomes the middle frequency f31 of a search range. In this example, the reception frequency changes to f31, f32, and f33, approaches the frequency fa with which the broadcast signal of the channel is transmitted, finally becomes the frequency fa, and then the search processing ends.

### Search Algorithm 4

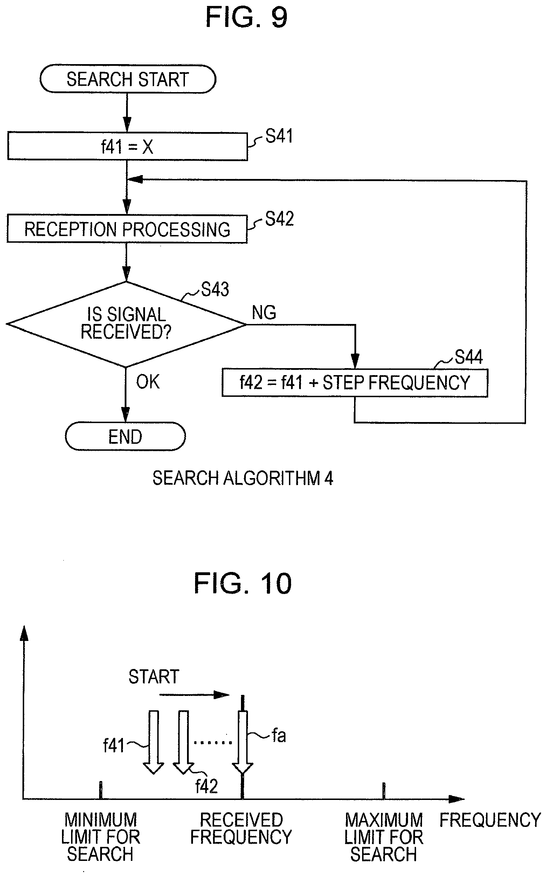

Fig. 9 is a flowchart illustrating the search algorithm 4. Fig. 10 is a diagram illustrating an example of change of the reception frequency at the time of executing the search algorithm 4. The search algorithm 4 corresponds to a modification example of the algorithm 1.

In a case of the search algorithm 1, the minimum limit frequency f11 of the search range is an initial search frequency. In contrast to this, in a case of the search algorithm 4, a specific frequency f41 which is shifted to the upper side from the minimum limit frequency f11 of the search range is set as a frequency fx at which searching initially starts (step S41). After that, the same processing as that of the search algorithm 1 is performed. That is, the control unit 91 sets the reception frequency f41 in the tuner unit 10 (step S42), and determines whether or not the broadcast signal of the target channel is received (step S43). In the determination of step S43, in a case where it is determined that the broadcast signal of the target channel is received, the search is ended, and in a case where it is determined that the broadcast signal is not received, the control unit 91 shifts the reception frequency fx from the current search frequency f41 to the frequency f42 higher than the current search frequency f41 by one step (step S44). After that, the processing returns to step S42, and the control unit 91 sets the reception frequency f42 in the tuner unit 10, in such a manner that the search frequency f42 is received. Then, until the broadcast signal of the target channel is received by the tuner unit 10, the control unit 91 repeatedly performs the processing of steps S42, S43, and S44. In addition, step S44 of Fig. 9 shows that the search frequency changes from the frequency f41 to frequency f42, but each time the processing is repeated in step S44, the frequency which is set changes through the frequencies f42, f43, ....

Fig. 10 is an example of change of the reception frequency in the tuner unit 10, when the control unit 91 executes the search algorithm 4. As illustrated in Fig. 10, the reception frequency of the tuner unit 10 initially becomes a frequency f41 which is shifted from the minimum limit frequency of the search range, and after that, becomes the frequency f42 higher than that by one step, and thereafter, gradually increases with the same frequency interval. Then, when the broadcast signal of the target channel is received by the tuner unit 10 at a reception frequency fa, the control unit 91 fixes the reception frequency of the tuner unit 10 to the frequency fa, and ends the search processing.

The algorithm 4 is provided instead of the search algorithm 1. That is, when the control unit 91 determines that there is no problem even if the frequency is searched for at a position of the frequency which is shifted from the minimum limit frequency at the time of the search due to some reason, the search algorithm 1 is used by switching to the search algorithm 4.

In addition, the search algorithm 4 is an example in which the search starts at a position of the frequency which is shifted from the minimum limit frequency of the search range. In contrast to this, in a case where the search starts at the maximum limit frequency of the search range shown in the search algorithm 2, the search may start at a position of the frequency which is shifted in the same manner as that.

### 3. Selection Processing Example of Search Algorithm

Next, in a case where the control unit 91 sends the receiving instruction to the tuner units 10 to 80, a selection processing example of the search algorithm will be described with reference to the flowchart of Fig. 11. Herein, it is assumed that tuning is performed in the first tuner unit 10, and the other tuner units 20 to 80 are in a receiving operation.

In addition, in this example, as the search algorithm being used for the control unit 91, the search algorithms 1, 2, and 3 other than the search algorithm 4 which is the modification example are provided, among the four search algorithms 1 to 4 described above. A priority sequence to be used is set in an ascending order of the search algorithms 1, 2, and 3. The priority sequence may be set separately. Alternatively, the algorithm which has been used for a previous search may be used preferentially.

The control unit 91 first determines a search frequency range (minimum limit frequency and maximum limit frequency) when the broadcast signal of the channel having a tuning requirement in the present situation is searched for, and determines a variation range of the oscillation frequency of the voltage controlled oscillator 12a at the time of searching for the frequency range, and the frequency division ratio of the frequency divider 12c (step S51). The tuning requirement is generated by a user operation performed in the operation unit 93, at the start of the recording scheduled in advance, or the like.

Then, the control unit 91 acquires all frequency information X(i) of the local oscillation signals which is generated by the local oscillation circuits 22 to 82 of the other tuner units 20 to 80 (step S52). At this time, in the frequency information X(i) of the local oscillation signal which is determined by the control unit 91, the information of the oscillation frequency of the voltage controlled oscillator and the information of the frequency division ratio of the frequency divider which are included in each of the local oscillation circuits 22 to 82 are included.

After that, the control unit 91 determines whether or not the oscillation frequency, which is set in step S51, assumed for the voltage controlled oscillator 12a, has a value which coincides with or is close to the oscillation frequency of the voltage controlled oscillator which is included in the other local oscillation circuits 22 to 82 (step S53). In this determination, in a case where the assumed oscillation frequency has a value coinciding with or close to the oscillation frequency of the voltage controlled oscillator, the control unit 91 changes the oscillation frequency range of the voltage controlled oscillator 12a set in step S51 and the frequency division ratio of the frequency divider 12c (step S54), and returns to the determination of step S53.

Then, in the determination of step S53, when it is determined that the oscillation frequency does not have a value coinciding with or close to the oscillation frequency of the voltage controlled oscillator, the control unit 91 proceeds to the determination of step S55.

In step S55, when the search algorithm set in the present situation searches, the control unit 91 determines whether or not there is a possibility of passing through the oscillation frequency of the voltage controlled oscillators included in each of the other local oscillation circuits 22 to 82, within the variation range of the oscillation frequency of the voltage controlled oscillator 12a.

In the determination of step S55, when it is determined that there is a possibility of passing through the oscillation frequency of the voltage controlled oscillators, the control unit 91 changes the search algorithm to another search algorithm (step S56). After the search algorithm is changed, the control unit 91 returns to the determination of step S55.

Then, in the determination of step S55, when it is determined that there is no possibility of passing through the oscillation frequency of the voltage controlled oscillators, the control unit 91 starts the search within the set search frequency range in the tuner unit 10 using the set search algorithm (step S57).

When the broadcast signal of the target channel is received by the tuner unit 10 during the search, the broadcast signal is received at the reception frequency at that time, and the tuning performed by the control of the control unit 91 is ended.

Next, a specific example in which the control unit 91 selects the search algorithm in the processing of the flowchart illustrated in Fig. 11 described above will be described. Herein, three selection examples (Selection Examples 1, 2, and 3 of search algorithm) are shown.

### Selection Example 1 of Search Algorithm

In this example, it is assumed that the first tuner unit 10 is receiving (oscillation frequency 2500 MHz of the voltage controlled oscillator) and the second tuner unit 20 performs a tuning operation. The other tuner units 30 to 80 do not perform the receiving operation. When the second tuner unit 20 performs the tuning, the oscillation frequency which is generated by the voltage controlled oscillator has two candidates of around 3000 MHz (first candidate) and around 6000 MHz (second candidate). The first candidate of around 3000 MHz and the second candidate of around 6000 MHz become the local oscillation signals having the same frequency, according to the change of the frequency division ratio of the frequency divider of the local oscillation circuit 22 in the second tuner unit 20.

At the time of such a condition, in step S53 of the flowchart illustrated in Fig. 11, the control unit 91 compares an oscillation frequency 2500 MHz of the first tuner unit 10 with the first candidate of the oscillation frequency of around 3000 MHz of the second tuner unit 20. At this time, the control unit 91 determines that the two oscillation frequencies are not values close to each other, and performs the determination of step S55.

In step S55, when using the search algorithm 1, the control unit 91 determines whether or not there is a possibility of passing through the oscillation frequency of 2500 MHz of the first tuner unit 10, within the search range which is up to the oscillation frequency of around 3000 MHz. Here, since the search algorithm 1 being set performs the processing of searching from the minimum limit frequency of the search range, and the minimum limit frequency is lower than the oscillation frequency of 2500 MHz, the control unit 91 determines that the oscillation frequency of 2500 MHz of the first tuner unit 10 is passed through in step S55.

In this example, after the determination of step S55, the control unit 91 proceeds to step S56, and changes the search algorithm being applied from the search algorithm 1 to the search algorithm 2. The search algorithm 2 searches the search range from the maximum limit frequency. When the search algorithm 2 is employed, the control unit 91, at the time of searching from the first candidate of the oscillation frequency of around 3000 MHz, determines that there is no possibility of passing through the oscillation frequency of 2500 MHz of the first tuner unit 10 in step S55.

Thus, in this example, the control unit 91 starts the searching at the second tuner unit 20 which employs the search algorithm 2, in step S57.

### Selection Example 2 of Search Algorithm

In this example, it is assumed that the first tuner unit 10 is receiving (oscillation frequency 6000 MHz of the voltage controlled oscillator) and the second tuner unit 20 performs a tuning operation. The other tuner units 30 to 80 do not perform the receiving operation. When the second tuner unit 20 performs the tuning, the oscillation frequency which is generated by the voltage controlled oscillator has two candidates of around 5980 MHz (first candidate) and around 2990 MHz (second candidate).

At the time of such a condition, in step S53 of the flowchart illustrated in Fig. 11, the control unit 91 compares an oscillation frequency of 6000 MHz of the first tuner unit 10 with the first candidate of the oscillation frequency of around 5980 MHz of the second tuner unit 20. At this time, the control unit 91 determines that the two oscillation frequencies are values close to each other, and in step S54, the oscillation frequency of the second tuner unit 20 is changed to the second candidate of the oscillation frequency of around 2990 MHz of the second tuner unit 20.

If the oscillation frequency becomes the second candidate of the oscillation frequency of around 2990 MHz, the control unit 91 determines that the oscillation frequency is separated from the oscillation frequency of 6000 MHz of the first tuner unit 10 in step S53, and proceeds to step S55.

In step S55, when using the search algorithm 1, the control unit 91 determines whether or not there is a possibility of passing through the oscillation frequency of 6000 MHz of the first tuner unit 10, within the search range which is up to the oscillation frequency of around 2990 MHz. Here, since the search algorithm 1 being set performs the processing of searching from the minimum limit frequency of the search range, the control unit 91 determines that the oscillation frequency of 6000 MHz of the first tuner unit 10 is not passed through in step S55.

Thus, in this example, the control unit 91 starts the searching at the second tuner unit 20 which employs the search algorithm 1, in step S57.

### Selection Example 3 of Search Algorithm

In this example, it is assumed that the first tuner unit 10 and the second tuner unit 20 are receiving (oscillation frequencies 2500 MHz and 6000 MHz of the voltage controlled oscillator) and the third tuner unit 30 performs a tuning operation. The other tuner units 40 to 80 do not perform the receiving operation. When the third tuner unit 30 performs the tuning, the oscillation frequency which is generated by the voltage controlled oscillator has two candidates of around 2500 MHz (first candidate) and around 5000 MHz (second candidate).

At the time of such a condition, in step S53, the control unit 91 compares the oscillation frequencies of 2500 MHz and 6000 MHz of the first tuner unit 10 and the second tuner unit 20, with the first candidate of the oscillation frequency of around 2500 MHz of the third tuner unit 30. At this time, the oscillation frequency of 2500 MHz of the first tuner unit 10 approximately coincides with the first candidate of the oscillation frequency of around 2500 MHz, and the oscillation frequency of the third tuner unit 30 is changed to the second candidate of the oscillation frequency of around 5000 MHz, in step S54.

If the oscillation frequency becomes the second candidate of the oscillation frequency of around 5000 MHz, the control unit 91 determines that the oscillation frequency is separated from either of the oscillation frequency of 2500 MHz of the first tuner unit 10 and the oscillation frequency of 6000 MH of the second tuner unit 20 in step S53, and proceeds to step S55.

In step S55, when using the search algorithm 1 which searches from the minimum limit frequency, the control unit 91 determines that there is a possibility of passing through the oscillation frequency of 2500 MHz of the first tuner unit 10, within the search range which is up to the oscillation frequency of around 5000 MHz.

For this reason, after the determination of step S55, the control unit 91 proceeds to step S56, and changes the search algorithm being applied to the search algorithm 2 which searches from the maximum limit frequency. When the search algorithm 2 is employed, it is determined that there is a possibility of passing through the oscillation frequency of 6000 MHz of the second tuner unit 20, within the search range which is up to the oscillation frequency of around 5000 MHz.

For this reason, furthermore, after the determination of step S55, the control unit 91 proceeds to step S56, and changes the search algorithm being applied to the search algorithm 3 which sets a center point of the search range. At the time of the search algorithm 3, when searching from the second candidate of the oscillation frequency of around 5000 MHz, the control unit 91 determines that there is no possibility of passing through the oscillation frequencies of 2500 MHz and 6000 MHz of each tuner unit 10 in step S55.

Thus, in this example, the control unit 91 starts the search by employing the search algorithm 3 in step S57.

As described in Selection Examples 1, 2, and 3 of the search algorithms described above, in all cases, the control unit 91 selects the search algorithm which does not pass through the oscillation frequency of the voltage controlled oscillator which is included in the other tuner units, thereby executing the search for the transmission signal. Thus, the oscillation frequencies of the voltage controlled oscillators in the plurality of tuner units cannot be approximately the same frequencies, and an appropriate tuning operation in which each of tuner units do not interfere with each other can be performed.

In addition, in the selection processing example of the search algorithm illustrated in the flowchart of Fig. 11, a plurality of candidates are provided as an oscillation frequency of a voltage controlled oscillator, and the control unit 91 selects an oscillation frequency which does not coincide with an oscillation frequency of other tuner units from the plurality of candidates. The control unit 91 performs such processing prior to the selection of the search algorithm, and thus, there is a more reliable effect in which each of tuner units do not interfere with each other. However, even in a case where only the selection of the search algorithm is performed without performing the processing which selects the oscillation frequency of the voltage controlled oscillator from the plurality of candidates, there is an effect in which an appropriate tuning operation in which each of tuner units do not interfere with each other is performed.

### 4. Modification Examples

The number of arranged tuner units illustrated in Fig. 1 is just an example, and the number of arranged tuner units may be changed. In addition, appropriate examples are illustrated with respect to the examples of the search algorithms illustrated in Figs. 3 to 10, and by providing other search algorithms, these may be set as candidates when the search algorithm is selected.

In addition, in the example illustrated in Fig. 1, each of the tuner units 10 to 80 is used as the tuner unit to which the signal received in one antenna 94 is supplied. In contrast to this, for example, each of the tuner units may operate as both a tuner for receiving a terrestrial broadcast signal and a tuner for receiving a satellite broadcast signal, and thereby a plurality of antennas may be connected thereto. Alternatively, a first group of tuner units in a plurality of tuner units may be the tuner unit for receiving the terrestrial broadcast signal, and a second group of tuner units may be the tuner unit for receiving the satellite broadcast signal.

In addition, in the selection processing example of the search algorithm illustrated in the flowchart of Fig. 11, the control unit 91 determines whether or not the oscillation frequency of the voltage controlled oscillator at the time of searching passes through the oscillation frequency of the voltage controlled oscillators in the local oscillation circuits included in other tuner units. In contrast to this, the control unit may determine whether or not the frequency of the local oscillation signal which is supplied to the tuner unit at the time of searching passes through the frequency of the local oscillation signals which are supplied to the receiving circuits of other tuner units, and may select the search algorithm based on that determination.

In addition, the example illustrated in Fig. 1 illustrates that the invention is applied to the control of the tuner unit which receives the television broadcast signal. In contrast to this, the processing according to the present disclosure may be applied to various receiving devices including a plurality of tuner units which receive other wireless transmission signals or wired transmission signals.

Furthermore, the configuration or the processing described in the present disclosure is not limited to the example of the embodiments described above, but only limited by the subject-matter of the claims. It is naturally understood by those skilled in the art that various modifications, combinations, and other embodiments can be made without departing from the subject-matter of the claims.

### Reference Signs List

10 to 80 TUNER UNIT
11 to 81 RECEIVING CIRCUIT
12 to 82 LOCAL OSCILLATION CIRCUIT
11c MIXER
12a VOLTAGE CONTROLLED OSCILLATOR
12c FREQUENCY DIVIDER
13 to 83 DEMODULATION CIRCUIT
91 CONTROL UNIT
92 MEMORY
93 OPERATION UNIT
94 ANTENNA
95 TELEVISION SIGNAL PROCESSING UNIT
96 VIDEO RECORDING UNIT
97 DISPLAY UNIT
99 BUS LINE

## Claims

1. A receiving device comprising:
a plurality of receiving circuits (11, 21);
a plurality of local oscillation circuits (13, 23) each of which supplies a local oscillation signals to one out of the plurality of receiving circuits (11, 21); and
a control unit (91) that provides a plurality of search algorithms for searching for reception frequencies in the receiving circuits (11, 21), and selects at the time of searching for a reception frequency in a specific receiving circuit (21) one out of the plurality of search algorithms by determining oscillation frequencies of oscillators (12a) included in other local oscillation circuits (13) corresponding to other receiving circuits (11) different from the specific receiving circuit (21), and selecting the search algorithm such that an oscillation frequency coinciding with the determined oscillation frequency or an oscillation frequency close to the determined oscillation frequency is avoided in an oscillator (12a) of the oscillation circuit (23) corresponding to the specific receiving circuit (21),
wherein as the search algorithm, at least two search algorithms that include a search algorithm which searches from a lower side of a search frequency range and a search algorithm which searches from an upper side of the search frequency range, are provided.

2. The receiving device according to Claim 1,
wherein as the search algorithm, a search algorithm which searches from approximately a middle value of the search frequency range is further provided.

3. The receiving device according to Claim 1,
wherein the control unit (91) changes setting of a frequency divider (12b) included in the local oscillation circuit (23) that supplies a local oscillation frequency signal to the specific receiving circuit (21), when the specific receiving circuit (21) searches for the reception frequency, and in a case of not being able to avoid an oscillation frequency coinciding with the determined oscillation frequency or an oscillation frequency close to the determined oscillation frequency, changes the search algorithm to other search algorithm.

4. An electronic apparatus comprising a receiving device according to any one of claims 1 to 3.

## Patentansprüche

1. Empfangsvorrichtung, die Folgendes aufweist:
eine Vielzahl von Empfangsschaltungen (11, 21);
eine Vielzahl von lokalen Schwingkreisen (13, 23), die jeweils einer der Vielzahl von Empfangsschaltungen (11, 21) ein lokales Schwingungssignal bereitstellen; und
eine Steuereinheit (91), die eine Vielzahl von Suchalgorithmen für die Suche nach Empfangsfrequenzen in den Empfangsschaltungen (11, 21) bereitstellt und zum Zeitpunkt der Suche nach einer Empfangsfrequenz in einer bestimmten Empfangsschaltung (21) einen aus der Vielzahl von Suchalgorithmen durch Bestimmen einer Schwingungsfrequenz von Schwingungserzeugern (12a), die in anderen lokalen Schwingkreisen (13), die anderen von der bestimmten Empfangsschaltung (21) unterschiedlichen Empfangsschaltungen (11) entsprechen, vorhanden sind, auswählt, und den Suchalgorithmus derart auswählt, dass eine Schwingungsfrequenz, die mit der bestimmten Schwingungsfrequenz oder einer Schwingungsfrequenz, die der bestimmten Schwingungsfrequenz nahe ist, übereinstimmt, in einem Schwingungserzeuger (12a) des Schwingkreises (23), der der bestimmten Empfangsschaltung (21) entspricht, vermieden wird,
wobei mindestens zwei Suchalgorithmen, die einen Suchalgorithmus, der von einer niedrigeren Seite eines Frequenzsuchbereichs sucht, und einen Suchalgorithmus, der von einer höheren Seite des Frequenzsuchbereichs sucht, aufweisen, als der Suchalgorithmus bereitstellt werden.

2. Empfangsvorrichtung nach Anspruch 1,
wobei ferner ein Suchalgorithmus, der von ungefähr einem Mittelwert des Frequenzsuchbereichs sucht, als der Suchalgorithmus bereitgestellt ist.

3. Empfangsvorrichtung nach Anspruch 1,
wobei die Steuereinheit (91) die Einstellung eines Frequenzteilers (12b), der in dem lokalen Schwingkreis (23) enthalten ist, der der bestimmten Empfangsschaltung (21) ein lokales Schwingungsfrequenzsignal bereitstellt, ändert, wenn die bestimmte Empfangsschaltung (21) nach der Empfangsfrequenz sucht, und den Suchalgorithmus zu einem anderen Suchalgorithmus ändert, in dem Fall, dass eine Schwingungsfrequenz, die mit der bestimmten Schwingungsfrequenz oder einer Schwingungsfrequenz, die der bestimmten Schwingungsfrequenz nahe ist, übereinstimmt, nicht vermieden werden kann.

4. Elektrische Vorrichtung, die eine Empfangsvorrichtung gemäß einem der Ansprüche 1 bis 3 aufweist.

## Revendications

1. Dispositif de réception comportant :
une pluralité de circuits (11, 21) de réception ;
une pluralité de circuits locaux (13, 23) d'oscillation dont chacun fournit un signal local d'oscillation à un circuit parmi la pluralité de circuits (11, 21) de réception ; et
une unité (91) de commande qui met en place une pluralité d'algorithmes de recherche servant à rechercher des fréquences de réception dans les circuits (11, 21) de réception, et sélectionne au moment de la recherche d'une fréquence de réception dans un circuit (21) de réception particulier un algorithme parmi la pluralité d'algorithmes de recherche en déterminant des fréquences d'oscillation de oscillateurs (12a) compris dans d'autres circuits locaux (13) d'oscillation correspondant à d'autres circuits (11) de réception différents du circuit (21) de réception particulier, et en sélectionnant l'algorithme de recherche de telle façon qu'une fréquence d'oscillation coïncidant avec la fréquence d'oscillation déterminée ou une fréquence d'oscillation proche de la fréquence d'oscillation déterminée soit évitée dans un oscillateur (12a) du circuit (23) d'oscillation correspondant au circuit (21) de réception particulier,
au moins deux algorithmes de recherche, incluant un algorithme de recherche qui effectue une recherche en partant d'un côté inférieur d'une plage de fréquences de recherche et un algorithme de recherche qui effectue une recherche en partant d'un côté supérieur de la plage de fréquences de recherche, étant mis en place en tant qu'algorithme de recherche.

2. Dispositif de réception selon la revendication 1, un algorithme de recherche qui effectue une recherche en partant approximativement d'une valeur médiane de la plage de fréquences de recherche, étant en outre mis en place en tant qu'algorithme de recherche.

3. Dispositif de réception selon la revendication 1, l'unité (91) de commande modifiant le réglage d'un diviseur (12b) de fréquence compris dans le circuit local (23) d'oscillation qui fournit un signal local d'oscillation en fréquence au circuit (21) de réception particulier, lorsque le circuit (21) de réception particulier recherche la fréquence de réception, et en en cas d'impossibilité d'éviter une fréquence d'oscillation coïncidant avec la fréquence d'oscillation déterminée ou une fréquence d'oscillation proche de la fréquence d'oscillation déterminée, remplaçant l'algorithme de recherche par un autre algorithme de recherche.

4. Appareil électronique comportant un dispositif de réception selon l'une quelconque des revendications 1 à 3.
